Europäisches Patentamt

European Patent Office

Office européen des brevets

(11) Publication number: **0 311 416**
**A2**

# EUROPEAN PATENT APPLICATION

(21) Application number: **88309362.7**

(22) Date of filing: **07.10.88**

(51) Int. Cl.⁴: **H 04 M 3/42**
**G 06 F 15/38**

(30) Priority: **08.10.87 JP 254141/87**

(43) Date of publication of application:
**12.04.89 Bulletin 89/15**

(84) Designated Contracting States: **DE FR GB IT**

(71) Applicant: **KABUSHIKI KAISHA TOSHIBA**
**72, Horikawa-cho Saiwai-ku**
**Kawasaki-shi Kanagawa-ken 210 (JP)**

(72) Inventor: **Nita, Tsuneo Patent Division**
**Toshiba Corporation Principal Office 1-1 Shibaura**
**1-chome Minato-ku Tokyo (JP)**

**Watanabe, Sadakazu Patent Division**
**Toshiba Corporation Principal Office 1-1 Shibaura**
**1-chome Minato-ku Tokyo (JP)**

**Nogami, Hiroyasu Patent Division**
**Toshiba Corporation Principal Office 1-1 Shibaura**
**1-chome Minato-ku Tokyo (JP)**

(74) Representative: **BATCHELLOR, KIRK & EYLES**
**2 Pear Tree Court Farringdon Road**
**London EC1R 0DS (GB)**

(54) Translating communication system having central translating apparatus.

(57) A translating communication system comprises first and second communication terminals each having a format input device for generating a format signal indicating a format of the translating communication and a speech input-output device for selectively converting an input human language into output speech data or converting received speech data into a human language, and a central translating apparatus including all the processing functions necessary to carry out the translating communication in rendering the output speech data from one of first and second communication terminals usable by the other communication terminal. Thus, the central translating apparatus selectively compensates conversion functions which are not equipped to each translating communication terminal in accordance with each format signal for converting a predetermined language of the output speech data into a prescribed language different from the prescribed language.

FIG.2.

Description

## TRANSLATING COMMUNICATION SYSTEM HAVING CENTRAL TRANSLATING APPARATUS

### BACKGROUND OF THE INVENTION

#### 1. Field of the invention

The present invention relates, in general, to communication systems. In paritcular, the invention relates to a translating communication system wherein an automatic translating communication can be carried out between communication terminals in different languages, e.g., English and Japanese.

#### 2. Description of the related art

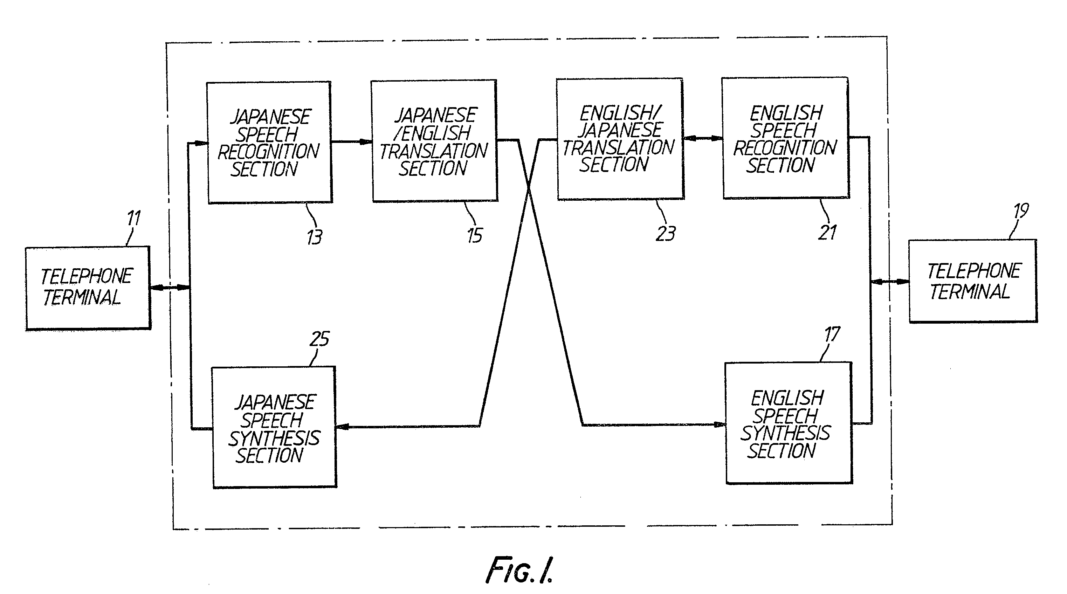

Various kinds of machine translation system have been developed. Some of the systems are practically used in specific fields. However, most useful translation systems are automatic translating communication system. By using such a system, users can simultaneously communicate with one another although using different languages. FIGURE 1 shows one example of the translating communication system, each component of which is now available to be used. Japanese/English language translating communication may be carried out by this basic system. In this system, one of Japanese and English languages, e.g., Japanese, is inputted by a speech from one of the telephone terminals 11. The input language is recognized in a Japanese speech recognition section 13, and Japanese language data are produced from Japanese speech recognition section 13. The Japanese language data are translated into English language data in a Japanese/English translation section 15. The English language data are converted to an English speech in an English speech synthesis section 17, and the English speech is finally outputted as a human language from the other telephone terminal 19. Similarly, when the other language, i.e., English, is inputted by a speech from the other telephone terminal 19, the input language is recognized in English speech recognition section 21, and an English language data are produced from English speech recognition section 21. The English language data are converted into Japanese language data in an English/Japanese translation section 23. The Japanese language data are converted to a Japanese speech in a Japanese speech synthesis section 25. The Japanese speech is outputted as a human language from one of the telephone terminals 11.

With the above-described translating communication system, a user of one of the telephone terminals 11 inputs communication data using Japanese language, and may listen to the communication data transmitted from the other telephone terminal 19 after it is converted into Japanese. On the other hand, a user of the other telephone terminal 19 inputs the other communication data in the English language, and may listen to the communication data transmitted from one of the telephone terminals 11 in English. However, various problems may occur when such a communication system is actually constructed and carried out. The most complicated problems are to recognize a speech inputted and to translate it into a suitable language. Similar data regarding to a specific item, e.g., phoneme, word, etc., to be selected in the recognition or translation process and inadequate recognition or translation caused by the similar data may occur while such operations are executed. Such problems may be improved by the progress of research and development of the machine translation function in future. However, in general, the improvement cost of such problems may become relatively high compared with the degree of improvement of the problems described above. If a translation task is limited to a specific field, systematized knowledge data of the specific field may be used to avoid an inadequate recognition or an inadequate translation, As a result, a speech based on an adequate translation along the intention of the user can be produced. Such a task limitation may be effective only for specific services, such as, e.g., data retrieval, data inquiry, etc.

According to the above-described circumstances, it is extremely difficult to fully automatize the translating communication by a speech input. Therefore, it is probable that translating communication system corresponding to specific translating communications will be constructed separately in future. If such a situation occurs, it will be difficult to carry out the translating communication between communication terminals which belong to different systems respectively. This problem may obstruct the development of an advanced translating communication system including communication terminals which have a different constitution from one to another.

As described above, there are complicated problems to be solved when such translating communication systems are organized in the future. It may be that processing functions provided to each communication terminal would be different from one another, in accordance with different system specifications. It may also be that the communication structure of each communication terminal would be different from one another.

### SUMMARY OF THE INVENTION

Accordingly, it is an object of the present invention to effectively respond to different communication terminals each of which includes a different processing structure to carry out a simultaneous translating communication between terminals.

To accomplish the above-object, a translating communication system includes at least first and second communication terminals each having a human speech input-output device for selectively converting an input human language into output speech data or converting received speech data into a human language and having a format input device for generating a format signal indicating the format of the translating communication, and a central translating apparatus for receiving the format signal and the output speech data from the first and second communication terminals. The central translating apparatus selectively performs conversion function on the output speech data from one of the first and second communication terminals in accordance with the format signal from the other communication terminal to render the output speech data usable by the other communication terminal, and provides the output speech data to the other communication terminal where it is used to output a human language different from the human language input into one of the first and second communication terminals.

The central translating apparatus may includes a speech analysis function, a speech segment recognition function, a word recognition function, and a translation function for converting a predetermined language of the output speech data into a prescribed language different from the predetermined language. The central translating apparatus may also include a rule synthesis function, and a speech synthesis function for rendering the output speech data usable by the other communication terminal.

BRIEF DESCRIPTION OF THE ACCOMPANYING DRAWINGS

Other features and advantages of the present invention will be apparent from the following description taken in connection with the following drawings wherein:

FIGURE 1 is a block diagram illustrating a basic translating communication system;

FIGURE 2 is a block diagram illustrating a translating communication system of one embodiment of the present invention;

FIGURE 3 is a block diagram illustrating a first example of a translating communication terminal shown in FIGURE 2;

FIGURE 4 is a block diagram illustrating a second example of the translating communication terminal;

FIGURE 5 is a block diagram illustrating construction of a central translating apparatus shown in FIGURE 2;

FIGURE 6 is a block diagram illustrating a third example of the translating communication terminal;

FIGURE 7 is a block diagram illustrating a fourth example of the translating communication terminal;

FIGURE 8 is a block diagram illustrating a fifth example of the translating communication terminal; and

FIGURE 9 is a block diagram illustrating another embodiment of the central translating apparatus of the present invention.

DETAILED DESCRIPTION OF THE PREFERRED EMBODIMENTS

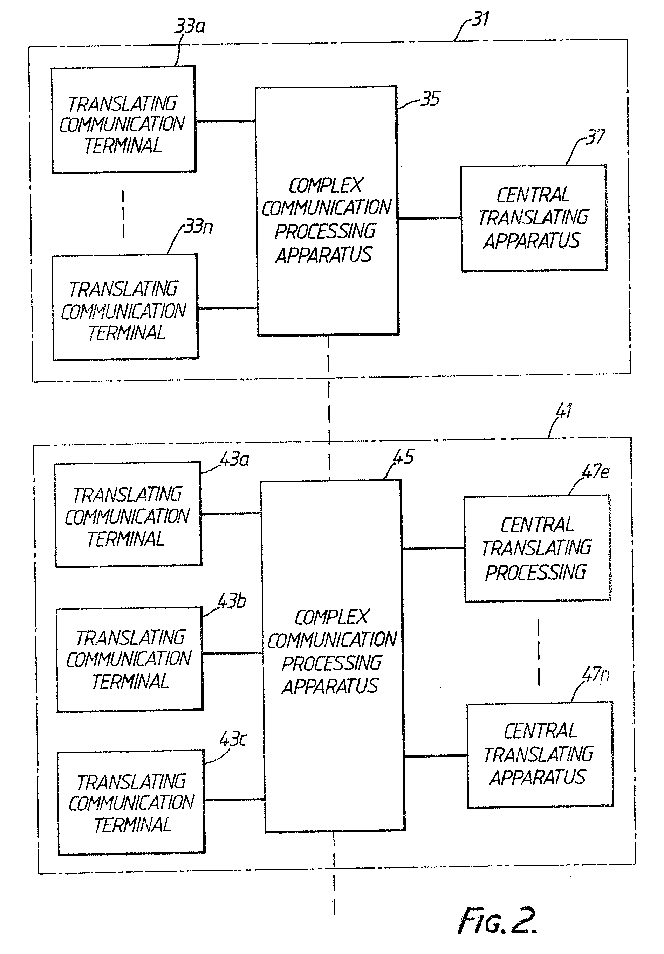

Preferred embodiments of the present invention will now be described hereafter with reference to the accompanying drawings. In FIGURE 2, a first communication group 31 of a translating communication system includes a plurality of translating communication terminals 33a, ..., 33n, a complex communication processing apparatus 35, and a central translating apparatus 37. The plurality of translating communication terminals 33a, ..., 33n are individually connected to complex communication processing apparatus 35. Central translating apparatus 37 also is connected to complex communication processing apparatus 35. A user may input speech data in a certain language through one of the translating communication terminals 33a. Complex communication processing apparatus 35 analyzes the speech data transmitted from one of the translating communication terminals 33a, and executes a suitable communicating operation based on the result of the analysis. Thus, the user of one of the translating communication terminals 33a may communicate with a user of another translating communication terminal 33n through complex communication processing apparatus 35. A second communication group 41 of the translating communication system also includes a plurality of translating communication terminals 43a, 43b and 43c, a complex communication processing apparatus 45, and a plurality of central translating apparatus 47a, ..., 47n. Each translating communication terminal 43a, 43b, 43c is connected to complex communication processing apparatus 45. Each central translating apparatus 47a, ..., 47n also is connected to complex communication processing apparatus 45. Therefore, a user of one of the translating communication terminals 43a can communicate with a user of another translating communication terminal, e.g., terminal 43, through complex communication processing apparatus 45. First communication group 31 and second communication group 41 constitute individual communication network. When complex communication processing apparatus 35 of first communication group 31 is connected to complex communication processing apparatus 45 of second communication group 41 through a suitable radio communication, the user of each translating communication terminal 33a, ..., 33n of first communication group 31 can communicate with the user of each translating communication terminal 43a, 43b, 43c of second communication group 41 through complex communication processing apparatus 35 and 45.

In this case, each translating communication terminals 33a, ..., 33n, 43a, 43b, 43c basically constitutes the translating communication system, as shown in FIGURE 1, therebetween when communicating. However, each translating communication terminal 33a, ..., 33n, 43a, 43b, 43c may include different processing functions from one another in accordance with individual translating communication system specifications. For example, an advanced translating communication terminal includes all the conversion functions of a speech translating communication system. A simple translating communication terminal includes a part of all the conversion functions of a speech translating communication system, e.g., probably only speech codec (coder-decoder). Such a simple translating communication terminal is able to communicate with only a specific translating communication terminal having the remaining conversion functions of the speech translating communication system in order to construct all the conversion functions of the speech translating communication system therebetween.

As stated before, each complex communication processing apparatus 35, 45 individually constitutes a closed communication circuit. One of complex communication processing terminals 35 and 45 may be connected to the other complex communication processing terminal to constitute an open communication circuit, if necessary. In particular, each communication group 31, 41 may be a communication network of a business company, or a communication network existing in a specific area, e.g., country.

As shown in FIGURE 2, central translating apparatus 37 is connected to complex communication processing apparatus 35 in first communication group 31, and central translating apparatus 47a, ..., and 47n are connected to complex communication processing apparatus 45 in second communication group 41. Each central translating apparatus 37, 47a, ..., 47n includes all the conversion functions of the speech translating communication system described hereafter to relay the speech translating communication between two translating communication terminals. The central translating apparatus compensates the translating communication terminal for certain conversion functions which are not enabled in the translating communication terminal in response to the construction or the translating communication mode of the translating communication terminal when communicating. If the translating communication terminal is provided with only a speech codec, the central translating apparatus recognizes the speech signals fed from the translating communication terminal, and carries out the translation on the basis of the result of the recognition. The central translating apparatus outputs the synthesized speech based on the translation in order to execute the translating communication.

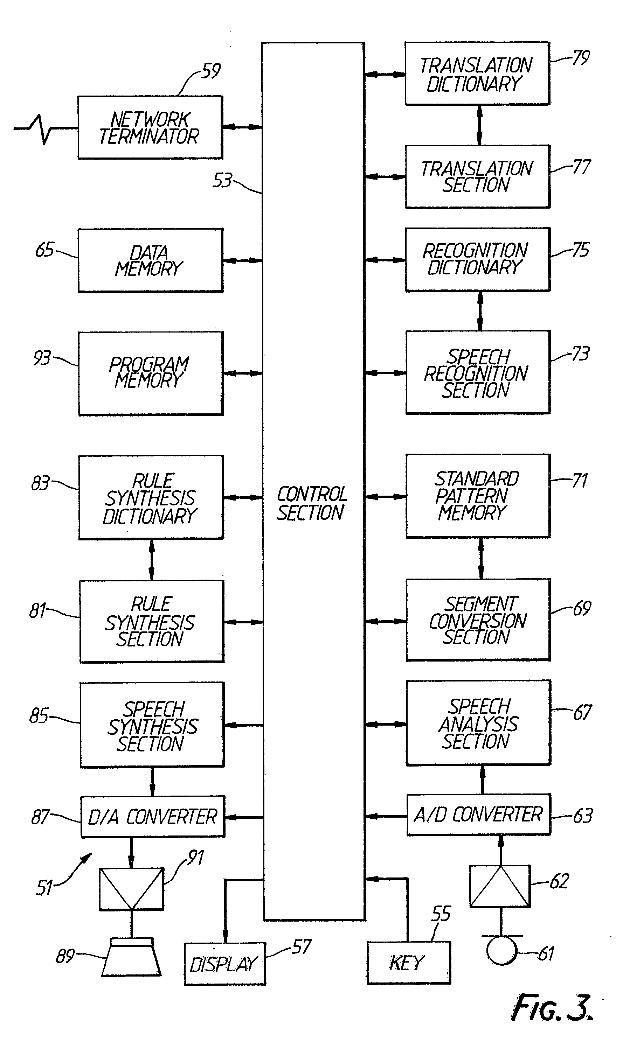

The construction of the above-described system will be described in more detail below. As shown in FIGURE 3, a translating communication terminal 51 includes all the conversion functions necessary to carry out the speech translating communication. That is, translating communication terminal 51 includes a control section 53, a key-input section 55, and a display 57. A prescribed key-input operation is carried out through key-input section 55 before commencement of the speech translating communication. The input data from key-input section 55 is fed to control section 53, and is transmitted from a network terminator 59 to the communication network, as shown in FIGURE 2. In this communication process, the constitution of the translating communication terminal 51, the data mode of the communication (non-translating communication or translating communication), and the translation mode (designation of the translation language and the translation form) are set and transmitted to central translating apparatus, e.g., apparatus 37, through complex communication processing apparatus 35. Simultaneously, complex communication processing apparatus 35 controls the connection of the communication network. At this time, message data necessary to the input operation may be outputted to display 57.

The translating communication operation of the above-described system will now be described hereafter. Speech input from microphone 61 through an amplifier 62 is converted from analog speech data to digital speech data by an A/D converter 63. The digital speech data are stored in a data memory 65. Simultaneously, the digital speech data are acoustically analyzed, e.g., filtering, etc., by a speech analysis section 67. Based on the result of the analysis by speech analysis section 67, segment data used for a speech recognition of VCV (Vowel Consonant Vowel) unit, phonemes or syllables are produced by a segment conversion section 69 with reference to standard pattern data from a standard pattern memory 71. In accordance with the segment data, the digital speech data are recognized by a speech recognition section 73 with reference to a recognition dictionary 75. This speech recognition operation is carried out by using the DP (Dynamic Programming) matching, or the transition network, etc. At this time, re-input of the speech is requested, if needed. The recognition results (language data) obtained by the above-described manner are divided into a suitable unit, e.g., clause unit, and the each unit is stored in data memory 65. A translation section 77 carries out the translation from the above-described language data into a prescribed language data with reference to a translation dictionary 79. In this translation processing operation, the translation is directly carried out from one language into a prescribed language, e.g., from English into Japanese, and vice versa. However, the one language may be translated into a prescribed language through a predetermined intermediate language commonly registered in this translating communication system. In general, the translating mode is preferably set at each translating communication terminal. The language data converted into a prescribed language is transmitted to the communication circuit through network terminator 59.

On the other hand, when a specific language data from the other translating communication terminal, e.g., terminal 33n, are received through network terminator 59, a rule synthesis section 81 produces phonemic · prosodic parameter data for the language data in accordance with a rule synthesis dictionary 83. Based on the phonemic · prosodic parameter data from rule synthesis section 81, a speech synthesis section 85 produces speech signals corresponding to the language data by the rule synthesis processing function, and outputs the speech signals to a D/A (digital/analog) converter 87. D/A converter 87 converts the speech signals (digital) into analog speech signals and outputs the analog speech signals to a speaker 89 through an amplifier 91. Thus, the synthesized speech is outputted from speaker 89. It should be noted that a program memory 93 shown in FIGURE 3 stores a control program, and control section 53 controls each processing section in accordance with the control program stored in program memory 93.

When each translating communication terminal carrying out the translating communication with one another is composed of the above-described processing sections, as shown in FIGURE 3, a speech of a certain language, e.g., Japanese, input to one of the translating communication terminals is converted into a prescribed language data, e.g., English data, and the prescribed language data are transmitted from one of the translating communication terminals to the other translating communication terminal. The prescribed language data are synthesized to the speech of the prescribed language, e.g., English, and the synthesized speech is outputted from the other translating communication terminal. With the similar manner as described above, a speech input to the other translating communication terminal in a certain language, e.g., English, is converted into a predetermined language data, e.g., Japanese data, and the predetermined language data are transmitted to one of the translating communication terminals described above through the communication circuit. The predetermined language data are synthesized to the speech of the predetermined language, e.g., Japanese, and the synthesized speech is outputted from one of the translating communication terminals. Thus, a mutual speech translating communication is carried out between Japanese and English.

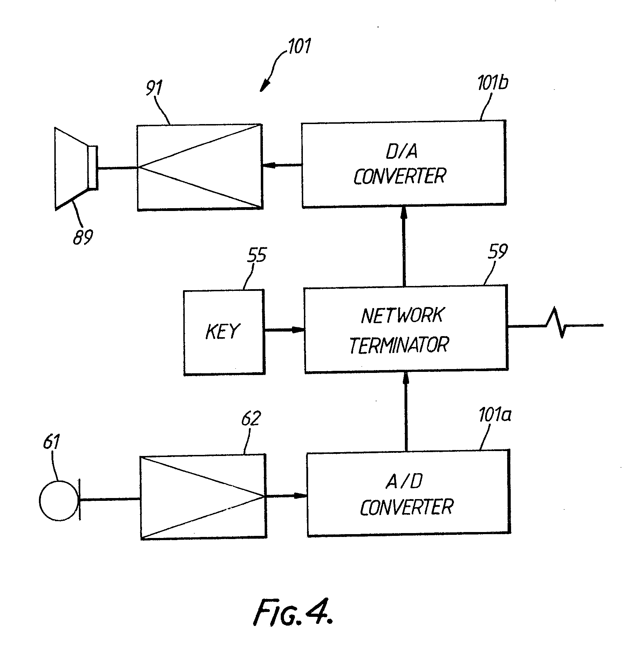

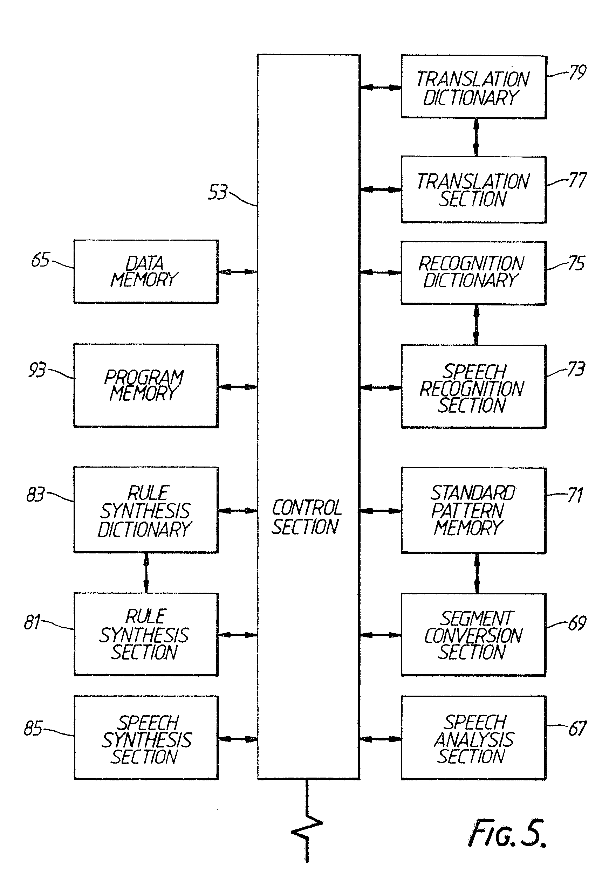

However, if one of the translating communication terminals includes all the conversion sections required to the translating communication, as shown in FIGURE 3, and the other translating communication terminal includes a part of the conversion sections, such as, e.g., a speech codec 101 composed of A/D converter 101a and D/A converter 101b, as shown in FIGURE 4, central translating apparatus 37 operates to carry out the translating communication between one of the translating communication terminals and the other translating communication terminal. Central translating apparatus 37 assists the other translating communication terminal composed of only speech codec 101 to execute the translating communication with one of the translating communication terminals. Central translating apparatus 37 is composed of a speech analysis section 67, a segment conversion section 69, a standard pattern memory 71, a speech recognition section 73, a recognition dictionary 75, a translation section 77, a translation dictionary 79, a data memory 65, a program memory 93, a rule synthesis section 81, a rule synthesis dictionary 83, and a speech synthesis section 85, as shown in FIGURE 5, and selectively controls each coversion section described above. In this case, the central translating apparatus controls all the conversion functions required to execute the translating communication.

As stated before, since the input data including the data mode of the communication, the constitution of the translating communication terminal, and the translation mode are inputted from key-input section 55 prior to the beginning of the speech communication, the central translating apparatus decides in accordance with the input data which conversion sections are required to carry out the translating communication between the specific translating communication terminals. Thus, the central translating apparatus changes its processing mode and selectively controls each conversion section to provide the conversion sections which are not contained in each translating communication terminal. For example, if the translating communication terminal includes the speech codec, as shown in FIGURE 4, the central translating apparatus executes the speech recognition after analyzing the speech data from the translating communication terminal. The central translating apparatus further executes the conversion of the speech data into a prescribed language data for the other translating communication terminal. Then, the central translating apparatus outputs the prescribed language data to the other translating communication terminal, e.g., including all the processing functions shown in FIGURE 3, through the complex communication processing apparatus. When the language data translated into a prescribed language is transmitted from the other translating communication terminal to the central translating apparatus, the central translating apparatus converts the language data to speech data by the rule synthesis processing function, and transmits the speech data to one of the translating communication terminals which is provided with only the speech codec.

As stated above, since the central translating apparatus relays the translating communication between translating communication terminals, each translating communication terminal may carry out the translating communication even if a specific translating communication terminal includes only a speech codec. This is because that the central translating apparatus selectively provides translating communication processing functions which are not contained in the specific translating communication terminal.

In the case wherein both translating communication terminals are equipped with only a speech codec shown in FIGURE 4, two central translating apparatus individually constructed as shown in FIGURE 5 may be used, and the conversion functions of each translating communication terminal may be compensated by respective central translating apparatus. In this case, two central translating apparatus are combined with one another to achieve the translating communication.

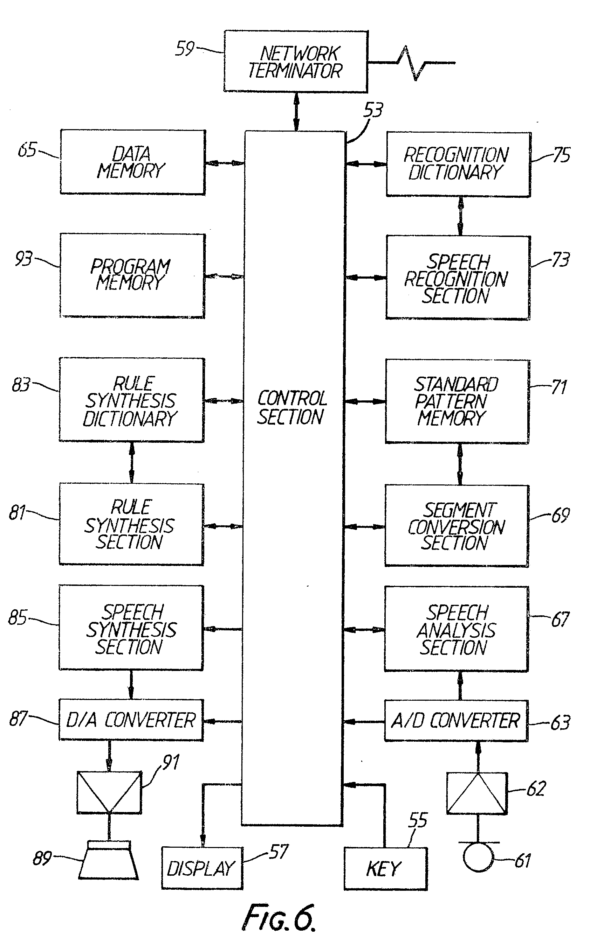

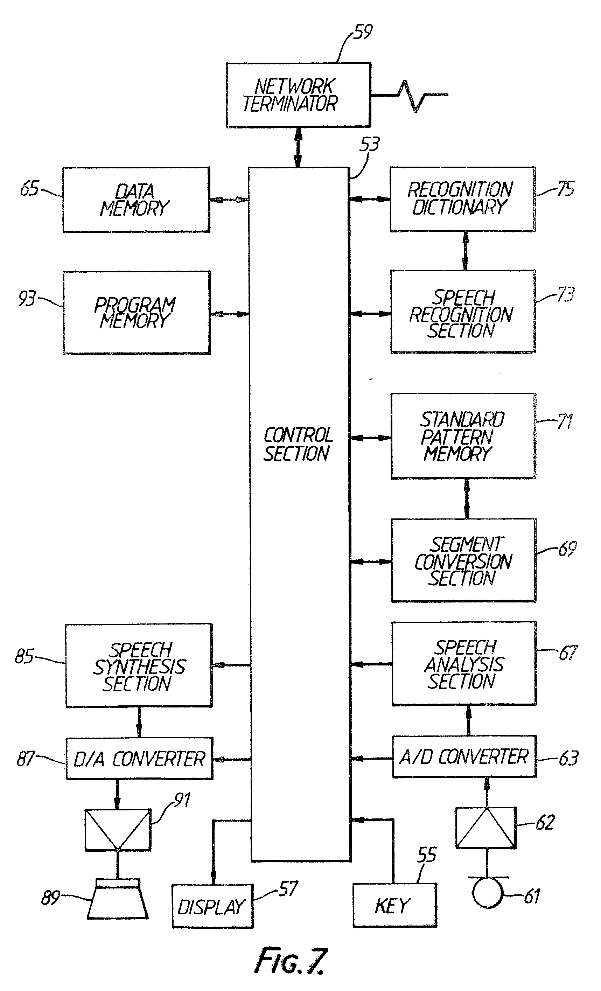

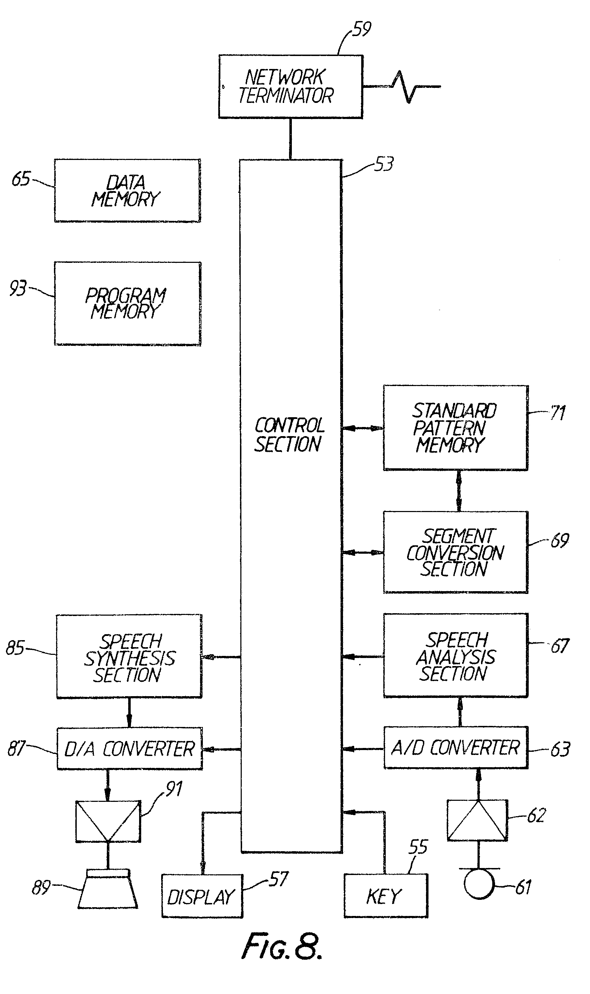

As shown in FIGURE 6, translating communication terminal 51 may be constructed such that translation processing function 77 including translation dictionary 79 is eliminated from the basic constitution of translating communication terminal 51 shown in FIGURE 3. As shown in FIGURE 7, translating communication terminal 51 may be constructed such that rule synthesis processing function 81 including rule synthesis dictionary 83 is further eliminated from the above-described construction of translating communication terminal 51 shown in FIGURE 6. Also, as shown in FIGURE 8, translating communication terminal 51 may be constructed such that speech recognition processing function 73 including recognition dictionary 75 is also eliminated from the construction of translating communication terminal 51 shown in FIGURE 7. Responding to each case described above, the central translating apparatus selectively changes processing mode, and relays the translating communication between each translating communication terminal constituted as described above.

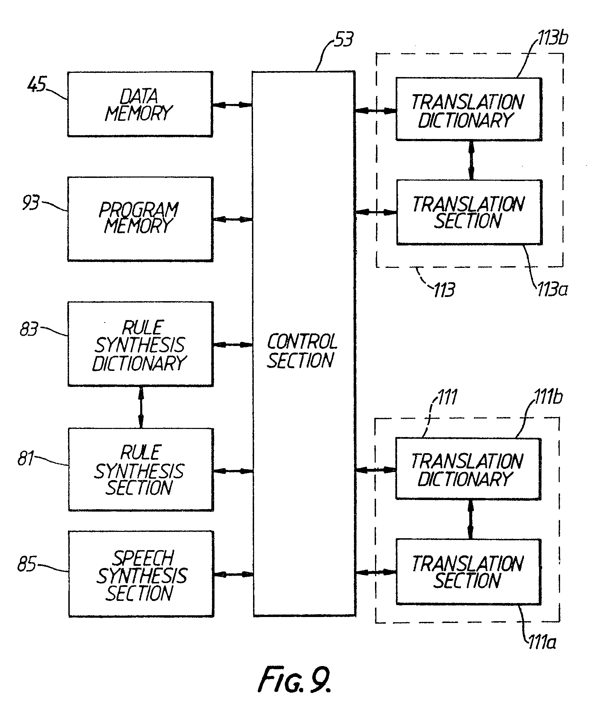

A second embodiment of the present inventin will now be described. As shown in FIGURE 9, the central translating apparatus may include a first translation processing section 111 and a second translation processing section 113. First translation processing section 111 includes translation section 111a and translation dictionary 111b. Second translation processing section 113 also includes translating section 113a and translation dictionary 113b. Translation dictionary 111b of first translation processing section 111 and translation dictionary 113b of second translation processing section 113 are different from one the other. With the above-described central translating apparatus, first language data from one of the translating communication terminals are translated into a prescribed intermediate language data by first translation processing section 111. The prescribed intermediate language data are further translated into a second language data by second translation processing section 113. For example, if English is set in all the translating communication systems, as a common intermediate language, and the central translating apparatus includes a Japanese/English translation processing section and an English/French translation processing section, Japanese language data are temporarily translated into English language data (intermediate language data), and then, the English language data are translated into French language data. As a result, it may be possible to carry out not only the Japanese/English translating communication and the English/French translating communication, but also the Japanese/French translating communication. In particular, with the central translating apparatus including the above-described processing functions, if Japanese language data from one of the translating communication terminals 33a are transmitted to central translating apparatus 37 through complex communication processing apparatus 35, central translating apparatus 37 translates the Japanese language data into English language data, and transmits the English language data to another complex communication processing apparatus 45, as shown in FIGURE 1. Furthermore, the English language data transmitted from complex communication processing apparatus 35 through another complex communication processing apparatus 45 are translated into French language data by one of the central translating apparatus 47a, and the French language data finally are outputted to one of the translating communication terminals 43a. The above-described translation processing operation is reciprocally carried out. Therefore, first and second communication groups 31 and 41 may individually be operated, and may be combined with one the other to carry out the translating communication therebetween.

With the above-described embodiment, when the translating communication is carried out between translating communication terminals, a central translating apparatus assists each translating communication terminal to execute the translating communication therebetween even if each translating communication has different translation processing functions. Therefore, a complete translating communication may be carried out between the translating communication terminals. Furthermore, since the central translating apparatus may include all the complicated processing functions necessary to carry out the translating communication, each translating communication terminal may include only the speech input-output device having the speech codec, resulting in a simplified construction of translating communication terminal.

In the above-described embodiment, display 57 of translating communication terminal 51 may output the language data transmitted from another translating communication terminal through the central translating apparatus. The translating communication system may use not only the above-described languages but also any other languages to carry out the translating communication. The translating communication may be simultaneously carried out between more than three different languages. Furthermore, the input speech recognition processing method, the translation processing method, or the speech synthesis method may be changed to another well known method in accordance with specific system specifications.

The present invention has been described with reference to a specific embodiments. However, other embodiments based on the principles of the present invention should be obvious to those of ordinary skill in the art. Such embodiments are intended to be covered by the claims.

**Claims**

1. A translating communication system comprising:
at least first and second communication terminal means, each said communication terminal means having a human speech input-output device for selectively converting an input human language into output speech data representing a predetermined language or converting received speech data into a human language, and each also having means for generating a format signal indicating the format of the translating communication; and
central translation means having conversion functions, said central translation means receiving said format signal and said output speech data from said first and second communication terminal means, said central translation means selectively performing conversion functions on said output speech data received from the first of said at least first and second communication terminal means in accordance with said format signal from the second of said communication terminal means to render said output speech data usable by the second communication terminal means, and providing said output speech data to the second communication terminal means, where it is used to output a human language different from said human language input into the first of said first and second communication terminal means.

2. A system according to claim 1, wherein said communication terminal means each includes a speech codec having A/D and D/A converters.

3. A system according to claim 1, wherein said communication terminal means each includes network terminator means for transmitting said output speech data between said communication terminal means and said central translation means.

4. A system according to claim 2, wherein each said communication terminal means includes display means for outputting message data for carrying out a translating communication.

5. A system according to claim 4, wherein each said communication terminal means includes key-input means for inputting communication format data used by said communication terminal means to generate said format signal.

6. A system according to claim 1, wherein said conversion functions of said central translation means includes a speech analysis function, a speech segment recognition function, a word recognition function, and a translation function for selectively converting said output speech data received from one of said first and second communication terminal means into output speech data representing a prescribed language different from said predetermined language in accordance with the format signal from the other of said first and second communication terminal means.

7. A system according to claim 6, wherein said conversion functions of said central translation means further includes a rule synthesis function, and a speech synthesis function for rendering said output speech data usable by the other communication terminal means.

8. A system according to claim 7, wherein said central translation means includes data memory means for storing said output speech data.

9. A system according to claim 7, wherein said central translation means includes program memory means for storing a control program for selectively controlling each function thereof.

10. A system according to claim 6, wherein said central translation means further includes a second translation function for further converting said output speech data indicating said prescribed language into an output data indicating a preset language different from said prescribed language and said predetermined language.

11. A system according to claim 1 further including complex communication processing means for transmitting said output speech data between one of said communication terminal means and said central translation means.

12. A translating communication system comprising:
a first communication group including,
at least first and second communication terminal means each having a speech input-output device for selectively inputting communication data in an output human language and outputting received communication data in said input human language,
first central translation means for receiving said communication data from one of said first and second communication terminal means, said first central translation means selectively assisting one of said first and second communication terminal means in rendering said communication data from one of said first and second communication terminal means usable by the other communication terminal means, and
first complex communication processing means for transmitting said communication data between one of said first and seocnd communication terminal means and said first central translation means; and
a second communication group including,
at least third and fourth communication terminal means each having a speech input-output device for selectively inputting communication data in an input human language and outputting received communication data in said input human language,
second central translation means for receiving said communication data from one of said third and fourth communication terminal means, said second central translation means selectively assisting one of said third and fourth communication terminal means in rendering said communication data from one of said third and fourth communication terminal means usable by the other communication terminal means, and
second complex communication processing means for transmitting said communication data between one of said third and fourth communication terminal means and said second central translation means, said second complex communication processing means being selectively connected to said first complex communication processing means for transmitting said communication data between first and second communication groups.

Fig.1.

EP 0 311 416 A2

FIG.2.

FIG. 3.

EP 0 311 416 A2

Fig.4.

Fig.5.

*Fig.6.*

*FIG. 7.*

EP 0 311 416 A2

*Fig.8.*

FIG. 9.